(19) Europäisches Patentamt
European Patent Office
Office européen des brevets

(11) EP 2 113 709 A1

(12) EUROPEAN PATENT APPLICATION
published in accordance with Art. 153(4) EPC

(43) Date of publication:
04.11.2009 Bulletin 2009/45

(51) Int Cl.:
F16L 57/04 (2006.01)        F16L 11/02 (2006.01)
B32B 1/08 (2006.01)

(21) Application number: 04805081.9

(22) Date of filing: 02.12.2004

(86) International application number:
PCT/ES2004/000538

(87) International publication number:
WO 2006/061442 (15.06.2006 Gazette 2006/24)

(84) Designated Contracting States:
AT BE BG CH CY CZ DE DK EE ES FI FR GB GR
HU IE IS IT LI LT LU MC NL PL PT RO SE SI SK TR

(71) Applicant: Relats, S.A.
08140 Caldes de Montbui (ES)

(72) Inventors:
• RELATS, Jordi
E-08140 Caldes De Montbui (Barcelona) (ES)
• RELATS, Pere
E-08140 Caldes De Montbui (Barcelona) (ES)

• ARTOLA, Dolors
E-08140 Caldes De Montbui (Barcelona) (ES)
• FRUNS, Anna
E-08140 Caldes De Montbui (Barcelona) (ES)

(74) Representative: Hengelhaupt, Jürgen et al
Gulde Hengelhaupt Ziebig & Schneider
Patentanwälte - Rechtsanwälte
Wallstrasse 58/59
10179 Berlin (DE)

(54) HEAT PROTECTION TUBE

(57) The invention refers to a heat protective tube, especially for the mechanical and thermal protection of electrical conducts and other components in automobiles.

The heat protection tube is comprising a first layer (1) formed by a plurality of threads which are braided, knit-braided or knitted to one another, a second covering layer (2) which covers the said first layer (1) and a third aluminium foil layer (3) which is disposed on the second layer (2) and **characterised in that** it comprises a fourth insulating layer (4) which is disposed on the third aluminium foil layer (3).

Fig.1

EP 2 113 709 A1

**Description**

Background to the Invention

At the present time protection tubes are used to protect electrical conductors and other components, especially in the automobile industry.

These protection tubes must combine different characteristics that make them suitable for these types of uses.

In the first place, the protection tubes must have great mechanical and thermal resistance, as they are used in areas of high temperature and where they are subjected to abrasion.

In addition, these protection tubes must include noise insulation characteristics, as it would be unacceptable for these protection tubes to produce noise when used in automobiles.

In order to solve these disadvantages there are a great number of protection tubes that combine these characteristics and which are currently used to protect cables in automobiles.

One of the most important characteristics that these protection tubes must have is resistance to high temperatures.

At the present time there are protective tubes formed by a series of layers, for example a first layer formed by a plurality of glass fibre threads braided to one another and a second layer of aluminium film on said first layer. These protection tubes are used to achieve good electromagnetic and thermal insulation.

In this case, the fixing of the layer of aluminium film to the first layer with adhesive is currently known. These types of protection tube have the disadvantage that they do not support high temperatures because of the adhesive.

Description of the Invention

With the protection tube of the invention the stated disadvantages are resolved, presenting other advantages which will be described.

The protection tube of this present invention comprises a first layer formed by a plurality of threads which are braided, knit-braided or knitted to one another, a second covering layer which covers the first layer, and a third aluminium foil layer which is disposed on the second layer, and is **characterised in that** it comprises a fourth insulating layer which is disposed on the third aluminium foil layer.

Advantageously, said fourth insulating layer is formed by a plurality of threads braided, knit braided or knitted to one another.

By preference, said braided, knit braided or knitted threads which form the fourth insulating layer are impregnated with a plastic material.

In accordance with a preferred embodiment, said braided, knit braided or knitted threads which form the fourth insulating layer are impregnated with silicone.

With the protection tube of this present invention excellent electromagnetic and thermal insulation is achieved, supporting high temperatures.

A Brief description of the Drawings

In order to give a greater understanding of that which has been stated some drawings are included in which an outline of a practical embodiment is made which is made by way of being an example and without being by way of limitation.

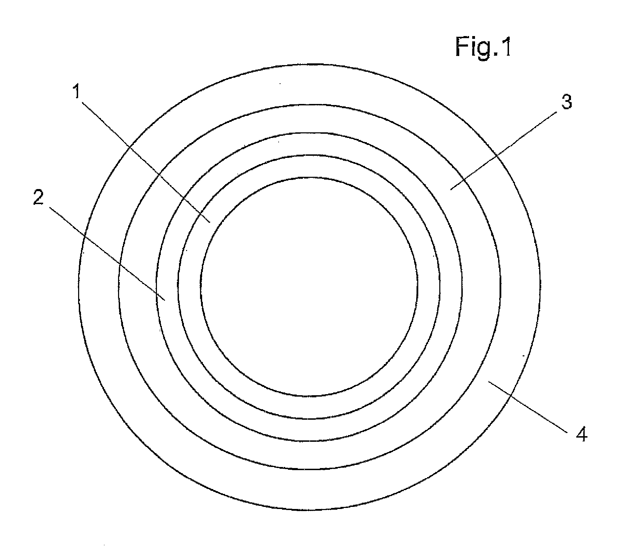

Figure 1 shows a transverse section view of the protective tube of the invention;

Figure 2 is a graph in which the results of the trials are shown in order to demonstrate the electromagnetic insulation of the protective tube of this present invention.

Description of a preferred embodiment

As and how can be seen in the only figure, the protective tube of the present invention is made up of four layers:

- first layer (1) formed by a plurality of glass fibre threads, braided, knit-braided or knitted to one another;
- A second layer of silicone (2) that covers said first layer (1) ;
- a third layer of aluminium foil (3) which is disposed on the second layer (2);
- a fourth insulating layer (4) which is disposed on said third aluminium foil layer, which is formed by a plurality of glass fibre threads which are braided, knit-braided or knitted to one another and impregnated with silicone.

For example the tube of this present invention can have a weight of 32.81 g/m and a thickness of 0.85 mm $\pm$

0.6 mm for a diameter of 11 mm.

In this case, the first layer (1) has a weight of 24.52 g/m and a thickness of 0.70 mm $\pm$ 0.4 mm, the second layer of silicone (2) has a weight of 0.66 g/m, the third layer of aluminium foil has a weight of 2.6 g/m with a thickness of 9 - 25 microns of aluminium and 23 microns of polyester, and the fourth layer (4) has a weight of 3.1 g/m formed by 68 tex glass fibre threads.

As has been previously stated, with the protective tube of the present invention excellent electromagnetic and thermal insulation is achieved, even at high temperatures.

In order to demonstrate this statement several trials have been carried out on the protective tube of this present invention.

In order to assess the electromagnetic insulation capacity of the protective tube of the present invention a spectrum analyser (Agilent E-4402B) was used with an internal radio-frequency generator.

A two-metre long wire, connected to the generator acted as the electromagnetic wave transmitter. A screened coaxial cable, parallel to the wire separated by some 2 cm, and with a length of 15 cm without screening, acted as the aerial, and was connected to the spectrum analyser.

First a measurement of the power received is carried out. After the 15 cm aerial is screened with the trial tube (sample) and the power received is again measured. The difference between both powers is a screening measurement of the sample.

It must be taken into account that the majority of measurements are of minimum screening, and that the real screening is always greater than that of the graphs. This is a consequence of the fact that the measurement with the screened aerial almost always gives a zero power received.

If the power transmitted were higher, or the sensitivity of the spectrum analyser were greater, measurements could be carried out in which the power received with the screening were different to zero, and therefore, maximum screening values would be the result.

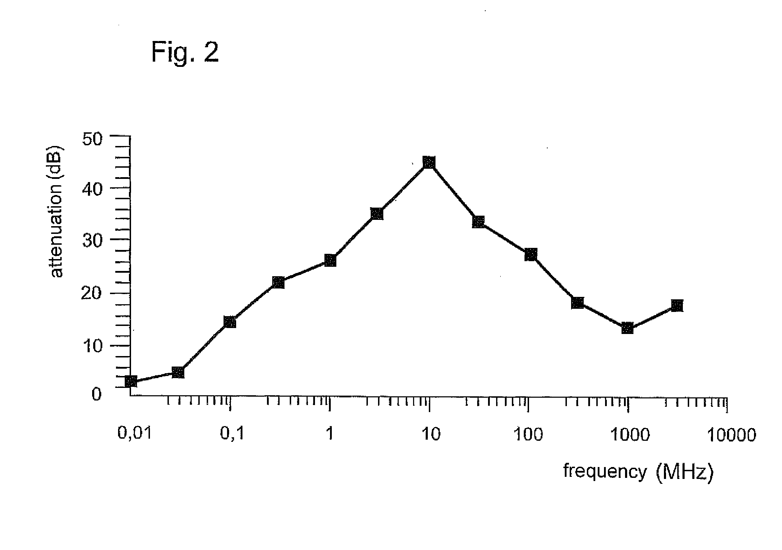

The results of the trial are shown in the graph in figure 2.

In order to check the characteristics of the thermal insulation a trial was also carried out. The main objective of this trial was to study the performance of the protection tube under an external heat source.

In this case, it is very important to control the ambient temperature whilst the trial is being carried out in order to obtain reliable performance. Depending on the ambient temperature, the thermal insulation results can change.

The trial was carried out in accordance with the BUNDY SA 01-006 R4 standard, under the following conditions:

Radiant heat source: 400° C
Distance: 35 mm under the heat source
Dimensions of the heat box: 420 mm x 420 mm x 245 mm.
Duration of the trial: 1 hour

Description of the thermocouples:

- Internal thermocouple: Position of the thermocouple touching the external surface of the ceramic cylinder, at the middle point of the length (15 cm) and measuring the temperature on the inside of the protective tube.
- Ambient thermocouple: A thermocouple for the measurement of the ambient temperature in the heat box.

During the trial all of the temperatures were recorded.

Delta T is calculated as the difference between the T of the transmitter and the T on the inside of the tube:

$$\text{Delta T = transmitter T - internal T}$$

The results of the trial are shown in the attached Table I.

Table I

| Time (min) | transmitter T (°C) | internal T (°C) | ambient T | Delta T (°C) |
|---|---|---|---|---|
| 0 | 25 | 24 | 25 | 1 |
| 2 | 121 | 50 | 34 | 71 |

(continued)

| Time (min) | transmitter T (°C) | internal T (°C) | ambient T | Delta T (°C) |
|---|---|---|---|---|
| 4 | 260 | 74 | 45 | 186 |
| 6 | 290 | 72 | 47 | 218 |
| 8 | 311 | 70 | 49 | 241 |
| 10 | 333 | 72 | 51 | 261 |
| 15 | 365 | 82 | 59 | 283 |
| 20 | 383 | 91 | 67 | 292 |
| 25 | 393 | 99 | 74 | 294 |
| 30 | 398 | 105 | 80 | 293 |
| 35 | 400 | 109 | 85 | 291 |
| 40 | 400 | 114 | 89 | 286 |
| 50 | 400 | 119 | 95 | 281 |
| 60 | 400 | 124 | 99 | 276 |

Even though the transmitter generates an external temperature of 400°C, this product on the inside of the tube reached a temperature not greater than 124°C.

10-day thermal ageing trials were carried out at 300°C and 48 hours at 400°C, the protection tube remained flexible keeping all of its thermal insulating properties. In spite of the fact that reference has been made to a specific embodiment of the invention, it is clear for an expert in the subject matter that the protection tube described is capable of being used with numerous variations and modifications, and all of the details mentioned can be substituted for others that are technically equivalent, without departing from the scope of the protection defined by the attached claims.

## Claims

1. Heat protection tube comprising a first layer (1) formed by a plurality of threads which are braided, knit-braided or knitted to one another, a second covering layer (2) which covers the said first layer (1) and a third aluminium foil layer (3) which is disposed on the second layer (2), **characterised in that** it comprises a fourth insulating layer (4) which is disposed on the third aluminium foil layer (3).

2. Protection tube according to Claim 1, **characterised in that** said fourth insulating layer (4) is formed by a plurality of threads which are braided, knit-braided or knitted to one another.

3. Protective tube according to Claim 2, **characterised in that** the braided, knit-braided or knitted threads that form the fourth insulating layer (4) are impregnated with a plastic material.

4. Protective tube according to Claim 3, **characterised in that** the braided, knit-braided or knitted threads that form the fourth insulating layer (4) are impregnated with silicone.

Fig.1

Fig. 2

**CORRECTED VERSION**

<div align="center"><b>INTERNATIONAL SEARCH REPORT</b></div>

| International application No. |
| --- |
| PCT/ ES 2004/000538 |

**A.    CLASSIFICATION OF SUBJECT MATTER**

<div align="center"><b>see addional sheet</b></div>

According to International Patent Classification (IPC) or to both national classification and IPC

**B.    FIELDS SEARCHED**

Minimum documentation searched (classification system followed by classification symbols)

F16L, B32B

Documentation searched other than minimum documentation to the extent that such documents are included in the fields searched

Electronic data base consulted during the international search (name of data base and, where practicable, search terms used)

CIBEPAT,EPODOC, WPI

**C.    DOCUMENTS CONSIDERED TO BE RELEVANT**

| Category* | Citation of document, with indication, where appropriate, of the relevant passages | Relevant to claim No. |
| --- | --- | --- |
| A | EP 0384995 A (TEXTILVE S.A.) 05.09.1990, columna 1, línea 46- **column 1, line 46 - column 2, line 6.** | 1-4 |
| A | ES 1050724 U (RELATS S.A.) 01.05.2002,  **column 2, lines 9-25.** | 1-4 |
| A | ES 2007818 A (RELATS S.A.) 01.07.1989,  **column 2, lines 54-65.** | 1-4 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
| --- | --- |
| (25.02.2005) | (11.04.2005) |
| Name and mailing address of the ISA/ <div align="center"><b>S.P.T.O.</b></div> | Authorized officer |
| Facsimile No. | Telephone No. |

Form PCT/ISA/210 (second sheet) (July 1992)

**INTERNATIONAL SEARCH REPORT**

International application No.

PCT/ ES 2004/000538

*F16L 57/04 (2006.01)*
*F16L 11/02 (2006.01)*
*B32B 1/08 (2006.01)*

Form PCT/ISA/210

| Patent document cited in search report | Publication date | Patent familiy member(s) | Publication date |
|---|---|---|---|
| EP 0384995 A1 | 05.09.1990 | GB 2225544 AB<br>EP 19890202978<br>US 5014753 A<br>DE 68911669 D<br>DE 68911669 T | 06.06.1990<br>23.11.1989<br>14.05.1991<br>03.02.1994<br>19.05.1994 |
| ES 1050724 U | 01.05.2002 | NONE | |
| ES2007818 A 6 | 01.07.1989 | NONE | |